# EUROPEAN PATENT APPLICATION

(11) **EP 4 275 819 A1**
(43) Date of publication of application: **15.11.2023**
(21) Application number: 22736732.3
(22) Date of filing: 04.01.2022
(51) Int. Cl.: B23B 27/00, B23B 27/08, B23B 27/16

(54) **CUTTING INSERT, HOLDER, AND BLADE-TIP-REPLACEABLE CUTTING TOOL**

(30) Priority: 07.01.2021 JP 2021001674
(71) Applicant: Mitsubishi Materials Corporation, Tokyo 100-8117 (JP)
(72) Inventor: HAGIWARA Takayuki, Tokyo 100-8117 (JP)
(74) Representative: Hoffmann Eitle
(86) International application number: PCT/JP2022/000004
(87) International publication number: WO 2022/149564

(57) **Abstract**

Provided is a cutting insert having a multi-stage columnar shape with an insert central axis as a center, the cutting insert including: a head portion having a circular cutting edge with the insert central axis as a center; a shaft portion disposed on a lower side of the head portion in an insert axial direction along the insert central axis and having a smaller outer diameter dimension than the head portion; a step portion configured to connect the head portion and the shaft portion; and an index portion disposed over a part of the step portion and a part of the head portion and recessed inward in an insert radial direction from an outer peripheral surface of each of the step portion and the head portion, in which a plurality of the index portions are arranged in an insert circumferential direction, and each of the index portions has a planar alignment surface facing outward in the insert radial direction.

## Description

### [Technical Field]

The present invention relates to a cutting insert, a holder, and an indexable cutting tool.

Priority is claimed on Japanese Patent Application No. 2021-001674, filed January 7, 2021, the content of which is incorporated herein by reference.

### [Background Art]

In the related art, an indexable cutting tool such as an indexable insert holder including a so-called round piece type cutting insert having a circular cutting edge, and a holder to which the cutting insert is detachably attached is known, for example, as described in Patent Documents 1 and 2. In this type of indexable cutting tool, in a case where a used portion of the cutting edge of the cutting insert is worn or chipped, and machining accuracy cannot be secured, an unused portion of the cutting edge is used for cutting by rotating the cutting insert around an insert central axis and reattaching the cutting insert to the holder. In the following description, rotating the cutting insert around the insert central axis and attaching the cutting insert to the holder while aligning the cutting insert in an insert circumferential direction in this way may be simply referred to as an "index".

In Patent Document 1, a plurality of marks arranged around the insert central axis are provided on an outer peripheral surface or a rake face of a round piece-shaped indexable insert (cutting insert), and an insert is indexed by visually aligning one of these marks with a mark of a tool main body (holder).

In Patent Document 2, a shank of a tool bit (cutting insert) is formed by a spline having a shape corresponding to a recessed portion of a socket of a tool holder. In a case where a new cutting edge portion is required, the tool bit is indexed by a fixed amount (predetermined angle) around the insert central axis. Additionally, the tool bit is fixed to the tool holder by using an elongated bar-shaped clamp member, an adjusting screw, and a fastening screw.

### [Citation List]

### [Patent Documents]

[Patent Document 1]
   Japanese Examined Utility Model Application, Second Publication No. S55-53283(Y2)
[Patent Document 2]
   Japanese Patent No. 3283521(B)

### [Summary of Invention]

### [Technical Problem]

In Patent Document 1, since indexing of the insert is performed visually, there was room for improvement in terms of improving accuracy and workability of alignment.

In Patent Document 2, each shape of the shank of the tool bit and the socket of the tool holder is complicated, which makes it difficult to manufacture each member. In addition, since constituent members of the tool include a clamp member and a plurality of screw members, the number of parts is large and a manufacturing cost increases. In addition, due to a clamp structure, it is difficult to suppress a tool width dimension of a tool tip portion of the tool on which the tool bit is disposed to be small.

An objective of the present invention is to provide a cutting insert, a holder, and an indexable cutting tool with a simple and compact configuration that reduces the number of parts and that can improve accuracy and workability of alignment when indexing a cutting insert.

### [Solution to Problem]

According to one aspect of the present invention, there is provided a cutting insert having a multi-stage columnar shape with an insert central axis as a center (hereinafter, referred to as a "cutting insert according to the present invention"), the cutting insert including: a head portion having a circular cutting edge with the insert central axis as a center; a shaft portion disposed on a lower side of the head portion in an insert axial direction along the insert central axis and having a smaller outer diameter dimension than the head portion; a step portion configured to connect the head portion and the shaft portion; and an index portion disposed over a part of the step portion and a part of the head portion and recessed inward in an insert radial direction orthogonal to the insert central axis from an outer peripheral surface of each of the step portion and the head portion, in which a plurality of the index portions are arranged in an insert circumferential direction around the insert central axis, and each of the index portions has a planar alignment surface facing outward in the insert radial direction.

In addition, according to one aspect of the present invention, there is provided a holder to which the cutting insert described above is detachably attached (hereinafter, referred to as a "holder according to the present invention"), the holder including: a cylindrical portion extending in the insert axial direction; and a guide wall portion disposed on an upper side of the cylindrical portion in the insert axial direction, in which the cylindrical portion has a shaft hole portion configured to hold the shaft portion by fitting, and the guide wall portion has a planar guide surface that faces inward in the insert radial direction and faces the alignment surface.

In addition, according to one aspect of the present invention, there is provided an indexable cutting tool (hereinafter, referred to as an "indexable cutting tool according to the present invention") including: the cutting insert described above; and a holder to which the cutting insert is detachably attached, in which the holder has a shaft hole portion configured to hold the shaft portion by fitting, and a planar guide surface that faces inward in the insert radial direction and faces the alignment surface.

According to the present invention, when the cutting insert is attached to the holder, the cutting insert is held by the holder by fitting the shaft portion into the shaft hole portion. In this case, a planar alignment surface of a predetermined index portion among the plurality of index portions of the cutting insert is guided by a planar guide surface of the holder, whereby the cutting insert is accurately aligned and indexed in the insert circumferential direction.

According to the present invention, a screw member or the like for fixing the cutting insert to the holder is unnecessary, the number of parts can be reduced, and a manufacturing cost can be reduced. In addition, the alignment surface and the guide surface for indexing the cutting insert have a simple structure, the cutting insert and the holder are easily manufactured, and the accuracy and workability of the alignment when performing indexing are improved.

In addition, the index portion of the cutting insert is recessed inward in the insert radial direction from the outer peripheral surface of each of the head portion and the step portion. Therefore, the alignment surface is located on the inner side in the insert radial direction with respect to the outer peripheral surface of each of the head portion and the step portion in the insert radial direction. The guide surface of the holder facing the alignment surface can also be disposed close to the insert central axis. Accordingly, for example, it is possible to dispose the guide wall portion of the holder where the guide surface is located, on the inner side in the insert radial direction with respect to the outer peripheral surface of the head portion of the cutting insert. According to the present invention, it is possible to achieve a compact size by suppressing a tool width dimension of a tool tip portion on which the cutting insert is disposed to be small, which makes it possible to cope with various cutting conditions.

In the cutting insert, it is preferable that a dimension of the alignment surface in the insert circumferential direction is larger than a dimension of the alignment surface in the insert axial direction.

In this case, a large dimension of the alignment surface in the insert circumferential direction is secured, so that indexing of the cutting insert is easier. In addition, since the dimension of the alignment surface in the insert axial direction is suppressed to be small, a volume reduction amount of the cutting insert due to the provision of the index portion can be suppressed to be small, and an insert strength can be secured.

In the cutting insert, it is preferable that the alignment surface has a maximum perimeter portion with a largest dimension in the insert circumferential direction, and a position of the maximum perimeter portion in the insert axial direction is the same as a position of a boundary portion between the head portion and the step portion in the insert axial direction.

In this case, it is easy to secure a large dimension of the alignment surface in the insert circumferential direction. Accordingly, indexability is improved.

In the cutting insert, it is preferable that the alignment surface is located outward in the insert radial direction toward an upper side in the insert axial direction.

In this case, the alignment surface has an inclined surface shape extending outward in the insert radial direction toward the upper side in the insert axial direction, and is inclined with respect to the insert central axis. Therefore, a volume reduction amount on the head portion side due to the provision of the index portion can be suppressed to be small, and an insert strength can be stably secured in the head portion in which the cutting edge is disposed.

In the cutting insert, it is preferable that the index portion has an upper side surface disposed on an upper side of the alignment surface in the insert axial direction, the upper side surface is located outward in the insert radial direction toward the upper side in the insert axial direction, and an inclination angle of the upper side surface with respect to the insert central axis is larger than an inclination angle of the alignment surface with respect to the insert central axis in a side view as viewed from the insert radial direction.

In this case, since the index portion has an upper side surface having a large inclination angle with respect to the insert central axis, a volume reduction amount on the head portion side due to the provision of the index portion can be further suppressed to be small.

In the cutting insert, it is preferable that an outer peripheral surface of the shaft portion has a tapered shape that increases in diameter toward the upper side in the insert axial direction, and an inclination angle of the outer peripheral surface of the shaft portion with respect to the insert central axis is smaller than an inclination angle of the alignment surface with respect to the insert central axis in a side view as viewed from the insert radial direction.

In this case, during manufacturing, processing for forming the shaft portion of the cutting insert and processing for forming the shaft hole portion of the holder that is fitted into the shaft portion are easy.

In the cutting insert, it is preferable that the outer peripheral surface of the head portion has a tapered shape that increases in diameter toward the upper side in the insert axial direction, and a difference between an inclination angle of the outer peripheral surface of the head portion with respect to the insert central axis and the inclination angle of the outer peripheral surface of the shaft portion with respect to the insert central axis is within 5° in the side view as viewed from the insert radial direction.

For example, in a case where the shaft portion of the cutting insert is held by the shaft hole portion and the head portion is supported by another part of the holder, when the inclination angle of the shaft portion and the inclination angle of the head portion are close to each other as in the above configuration, a fixed state of the cutting insert to the holder is less affected even though the cutting insert is isotropically expanded and contracted by sintering or the like during manufacturing. That is, the cutting insert is stably held by the holder.

In the cutting insert, it is preferable that, in the insert axial direction, an upper end portion of the alignment surface is located above a boundary portion between the head portion and the step portion, and is located below a mid point between the boundary portion and the cutting edge.

In this case, it is possible to easily secure a large dimension of the alignment surface in the insert circumferential direction while stably increasing a cutting edge strength, thereby improving workability of the indexing.

In the cutting insert, it is preferable that the plurality of index portions include a pair of the index portions that are disposed at 180° rotationally symmetrical positions with the insert central axis as a center.

In this case, each alignment surface of the pair of index portions facing opposite sides of each other in the insert radial direction is guided by each of a pair of the guide surfaces of the holder, thereby improving the accuracy and workability of the alignment when performing indexing.

In the holder, it is preferable that the cylindrical portion is disposed at an end portion of the holder on a tool tip side, and the guide wall portion protrudes upward from a portion, excluding an end portion on the tool tip side, of an upper end portion of the cylindrical portion.

In this case, since the guide wall portion is not disposed between the cylindrical portion and a used portion (front cutting edge portion) of the cutting edge that is located directly above the end portion of the cylindrical portion on the tool tip side, the guide wall portion is less likely to interfere with machining. In addition, a coolant can be efficiently supplied to the used portion of the cutting edge from the lower side of the cutting insert through a flank face.

It is preferable that the holder further includes a head portion restraining surface that is disposed above the cylindrical portion in the insert axial direction and that comes into contact with at least a part of an outer peripheral surface of the head portion.

In this case, the cutting insert is held by the holder in such a manner that the shaft portion is fitted into the shaft hole portion, and the head portion is supported by the head portion restraining surface. Therefore, an attaching posture of the cutting insert with respect to the holder is more stable.

In the indexable cutting tool, it is preferable that the alignment surface and the guide surface face each other with a gap therebetween.

In this case, when performing indexing, the shaft portion is stably fitted into the shaft hole portion while the alignment surface is stably guided by the guide surface. Therefore, the attaching posture (that is, fixed state) of the cutting insert with respect to the holder is more stable.

### [Advantageous Effects of Invention]

According to the aspects of the present invention, the cutting insert, the holder, and the indexable cutting tool have simple and compact configurations, the number of parts is reduced, and the accuracy and workability of the alignment when indexing a cutting insert can be improved.

### [Brief Description of Drawings]

FIG. 1 is a perspective view showing an indexable cutting tool according to the present embodiment.
FIG. 2 is a front view showing the indexable cutting tool.
FIG. 3 is a top view showing a part of the indexable cutting tool.
FIG. 4 is a side view showing a part of the indexable cutting tool.
FIG. 5 is a cross-sectional view showing a V-V cross section of FIG. 3.
FIG. 6 is a cross-sectional view showing a VI-VI cross section of FIG. 4.
FIG. 7 is a perspective view showing a cutting insert according to the present embodiment.
FIG. 8 is a top view showing the cutting insert.
FIG. 9 is a side view showing the cutting insert.
FIG. 10 is a side view showing the cutting insert, and is a view of the cutting insert viewed from an insert radial direction different from that in FIG. 9.
FIG. 11 is a perspective view showing a part of a holder according to the present embodiment.
FIG. 12 is a top view showing a part of the holder.
FIG. 13 is a cross-sectional view showing a XIII-XIII cross section of FIG. 12.
FIG. 14 is a cross-sectional view showing a XIV-XIV cross section of FIG. 12.

### [Description of Embodiments]

A cutting insert 1, a holder 2, and an indexable cutting tool 10 according to an embodiment of the present invention will be described with reference to the drawings. The indexable cutting tool 10 is, for example, an indexable cutting tool that turns a work material (not shown). Specifically, the indexable cutting tool 10 according to the present embodiment is an indexable insert holder for outer diameter and inner diameter machining, which performs rough copying on an outer peripheral surface, an inner peripheral surface, or the like of the work material. The indexable cutting tool 10 is detachably attached to a tool rest of a machine tool, such as a lathe (not shown). The work material to be cut by the indexable cutting tool 10 is, for example, a metal material made of a heat resistant alloy used for aircraft engine parts and the like.

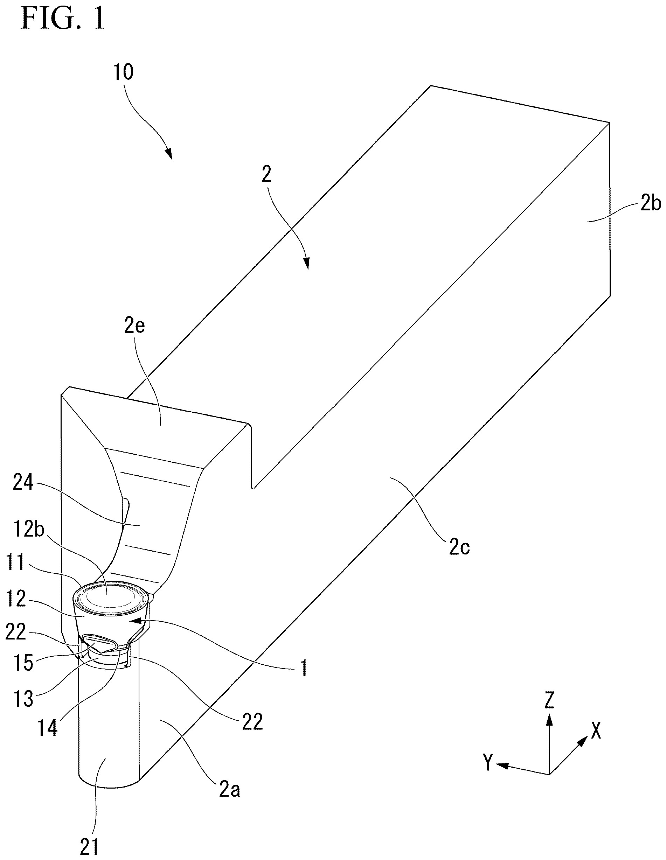

As shown in FIGS. 1 to 6, the indexable cutting tool 10 includes a cutting insert 1 having a multi-stage columnar shape with an insert central axis C as a center, and a holder 2 to which the cutting insert 1 is detachably attached.

The cutting insert 1 includes a head portion 12 having a circular cutting edge 11 with the insert central axis C as a center, a shaft portion 13 having a smaller outer diameter dimension than the head portion 12, a step portion 14 that connects the head portion 12 and the shaft portion 13, and an index portion 15.

The holder 2 has a substantially prismatic shape and extends along a tool central axis (not shown). The holder 2 includes a cylindrical portion 21, a guide wall portion 22, a head portion restraining wall portion 23, and a front wall portion 24. A part of the cylindrical portion 21, the guide wall portion 22, the head portion restraining wall portion 23, and the front wall portion 24 is disposed at a first end portion 2a of both end portions of the holder 2, that is, the first end portion 2a and a second end portion 2b.

### [Definition of Directions]

In the present embodiment, a direction in which the tool central axis of the holder 2 extends is referred to as a tool axial direction. In the XYZ orthogonal coordinate system shown in each figure, the tool axial direction corresponds to an X axis direction. In the tool axial direction, a direction (-X side) from the second end portion 2b of the holder 2 toward the first end portion 2a is referred to as a tool tip side or simply referred to as a tip side, and a direction (+X side) from the first end portion 2a toward the second end portion 2b is referred to as a tool posterior end side or simply referred to as a posterior end side.

A direction in which a pair of side surfaces 2c and 2d of the holder 2 face in a direction orthogonal to the tool central axis is referred to as a tool width direction (left-right direction). The tool width direction corresponds to a Y axis direction. In the tool width direction, a direction (+Y side) from one side surface 2c toward the other side surface 2d is referred to as a left side, and a direction (-Y side) from the other side surface 2d toward the one side surface 2c is referred to as a right side.

A direction orthogonal to the tool axial direction and the tool width direction is referred to as an up-down direction. The up-down direction corresponds to a Z axis direction. The up-down direction is a direction in which a top surface 2e and a bottom surface 2f of the holder 2 face. In the up-down direction, a direction (+Z side) from the bottom surface 2f toward the top surface 2e is referred to as an upper side, and a direction (-Z side) from the top surface 2e toward the bottom surface 2f is referred to as a lower side.

The insert central axis C of the cutting insert 1 extends along the up-down direction. That is, the insert axial direction along the insert central axis C is the same as the up-down direction. Therefore, in the present embodiment, the up-down direction may be referred to as the insert axial direction. In the insert axial direction, the head portion 12 and the shaft portion 13 are disposed at positions different from each other.
In the insert axial direction, a direction (+Z side) from the shaft portion 13 toward the head portion 12 is an upper side, and a direction (-Z side) from the head portion 12 toward the shaft portion 13 is a lower side.

A direction orthogonal to the insert central axis C is referred to as an insert radial direction. In the insert radial direction, a direction approaching the insert central axis C is referred to as inward in the insert radial direction, and a direction away from the insert central axis C is referred to as outward in the insert radial direction.

A direction of turning around the insert central axis C is referred to as an insert circumferential direction.

In the present embodiment, the left side, the right side, the upper side, and the lower side are simply names for describing a relative positional relationship of each portion, and a disposition relationship for an actual use may be disposition relationships other than the disposition relationship indicated by these names.

### [Cutting Insert]

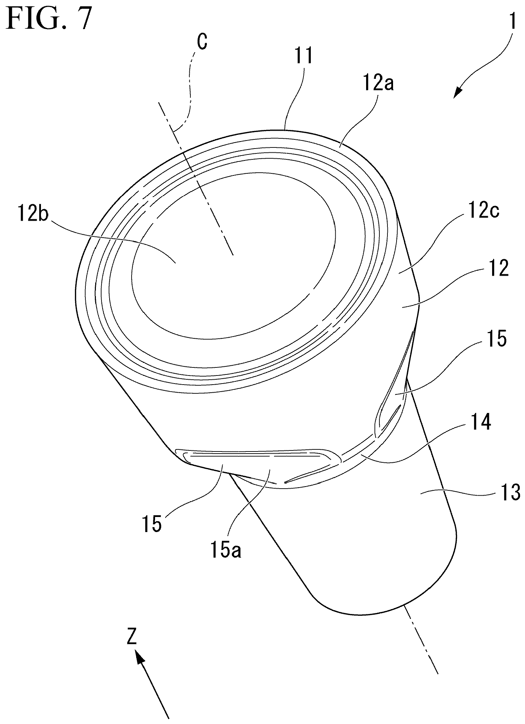

The cutting insert 1 is made of, for example, cemented carbide. The cutting insert 1 is removably fixed to the first end portion 2a (that is, a tip portion) of the holder 2. As shown in FIGS. 7 to 10, the cutting insert 1 has a multi-stage columnar shape in which outer diameters of respective portions in the insert axial direction are different from each other. The cutting insert 1 according to the present embodiment is a so-called round piece insert.

The head portion 12 has a columnar shape with the insert central axis C as a center. An outer peripheral surface of the head portion 12 has an annular shape with the insert central axis C as a center, and extends in the insert circumferential direction. The outer peripheral surface of the head portion 12 has a tapered shape that increases in diameter toward an upper side in the insert axial direction. That is, the outer diameter (outer diameter dimension) of the head portion 12 increases toward the upper side in the insert axial direction.

The head portion 12 has a cutting edge 11, a rake face 12a, a pressed surface 12b, and a flank face 12c.

The cutting edge 11 is disposed on a ridge portion where the outer peripheral surface and an upper surface of the head portion 12 are connected. The cutting edge 11 extends in the insert circumferential direction. The cutting edge 11 is disposed on an outer peripheral portion of an upper end of the head portion 12 over the entire circumference. The cutting edge 11 is located on the outermost side of the head portion 12 in the insert radial direction. The cutting edge 11 is a portion located on the outermost side of the cutting insert 1 in the insert radial direction.

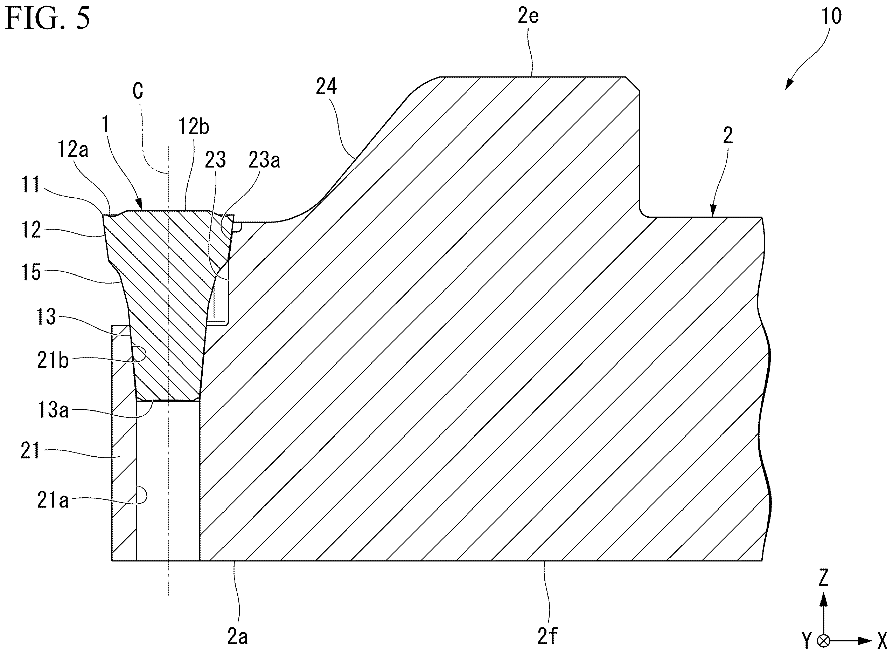

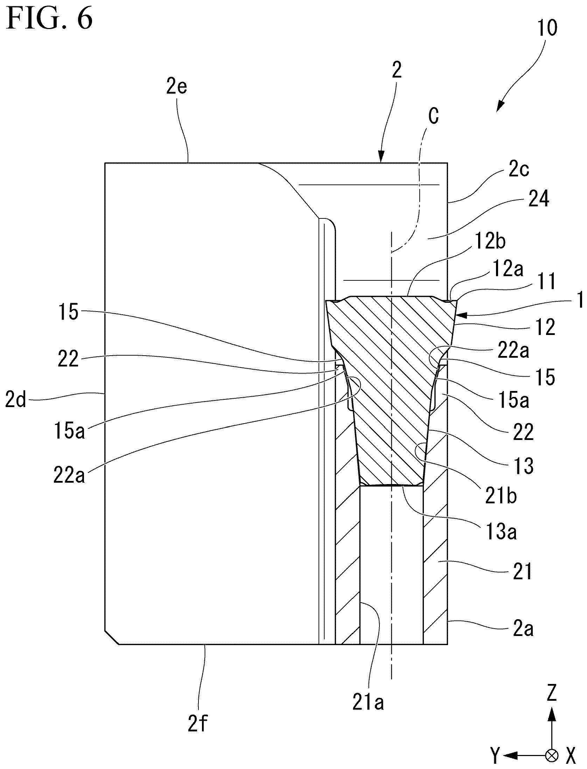

The rake face 12a is a portion of the upper surface of the head portion 12 that is located on the outer peripheral portion. The rake face 12a is disposed inside the cutting edge 11 in the insert radial direction and is connected to the cutting edge 11. As shown in FIGS. 5 and 6, a portion of the rake face 12a adjacent to the cutting edge 11 has an inclined surface shape that is located downward in the insert axial direction toward the inner side in the insert radial direction. That is, a rake angle of the cutting edge 11 is a positive angle (regular angle).

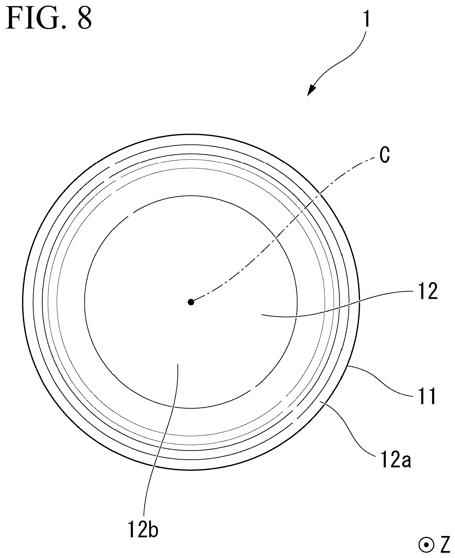

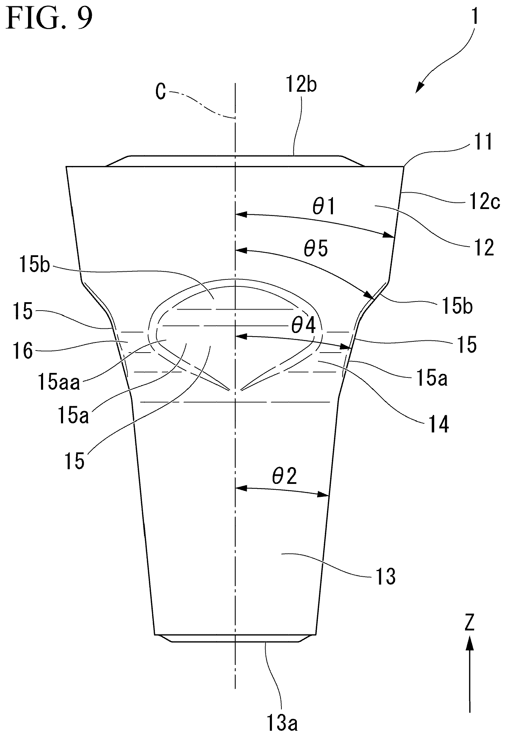

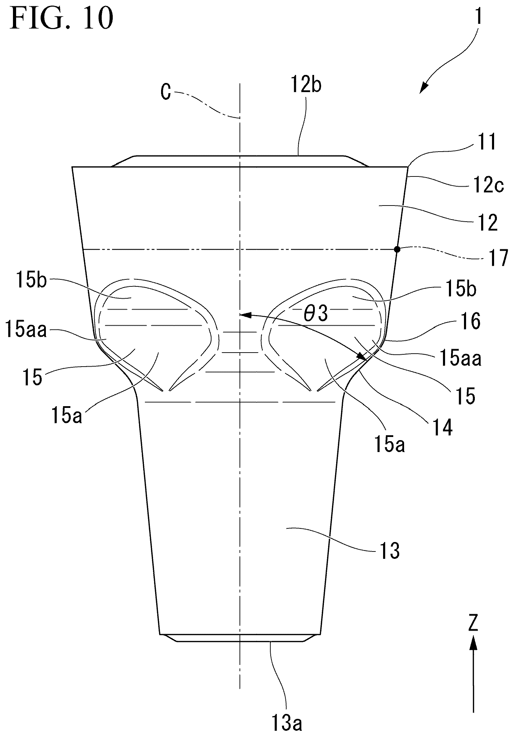

As shown in FIGS. 7 and 8, the pressed surface 12b is a portion of the upper surface of the head portion 12 that is located on the inner side in the insert radial direction with respect to the rake face 12a. The pressed surface 12b has a circular surface shape with the insert central axis C as a center. The pressed surface 12b has a planar shape spreading in a direction perpendicular to the insert central axis C. As shown in FIGS. 9 and 10, the pressed surface 12b is located above the cutting edge 11 in the insert axial direction. A distance between the pressed surface 12b and the cutting edge 11 in the insert axial direction is, for example, 0.05 mm or greater and 1.0 mm or less. The pressed surface 12b is located on the uppermost side of the head portion 12 in the insert axial direction. The pressed surface 12b is a portion located on the uppermost side of the cutting insert 1 in the insert axial direction.

The flank face 12c is a portion located at an upper end portion of the outer peripheral surface of the head portion 12. The flank face 12c is disposed on the lower side of the cutting edge 11 in the insert axial direction and is connected to the cutting edge 11. The flank face 12c has an inclined surface shape that is located inward in the insert radial direction toward the lower side in the insert axial direction. That is, the cutting edge 11 has a clearance angle.

The shaft portion 13 is disposed on the lower side of the head portion 12 in the insert axial direction. The shaft portion 13 has a columnar shape with the insert central axis C as a center. A dimension in the insert axial direction of the shaft portion 13 is larger than a dimension in the insert axial direction of the head portion 12. An outer peripheral surface of the shaft portion 13 has an annular shape with the insert central axis C as a center, and extends in the insert circumferential direction. The outer peripheral surface of the shaft portion 13 has a tapered shape that increases in diameter toward an upper side in the insert axial direction. That is, the outer diameter of the shaft portion 13 increases toward the upper side in the insert axial direction.

As shown in FIG. 9, a difference between an inclination angle Θ1 of the outer peripheral surface of the head portion 12 with respect to the insert central axis C and an inclination angle Θ2 of the outer peripheral surface of the shaft portion 13 with respect to the insert central axis C is within 5° in a side view as viewed from the insert radial direction. That is, the inclination angle Θ1 and the inclination angle θ2 are substantially the same angle.

The inclination angles Θ1 and 2 may be 2° or greater and 15° or less, may be 4° or greater and 10° or less, or may be 5° or greater and 8° or less.

The term "side view as viewed from the insert radial direction" described in the present embodiment may be appropriately rephrased as "a vertical sectional view including the insert central axis C", "a vertical sectional view along the insert central axis C", or the like.

The shaft portion 13 has a lower surface 13a. The lower surface 13a has a circular surface shape with the insert central axis C as a center. The lower surface 13a has a planar shape spreading in a direction perpendicular to the insert central axis C.

The lower surface 13a is located on the lowermost side of the shaft portion 13 in the insert axial direction. The lower surface 13a is a portion located on the lowermost side of the cutting insert 1 in the insert axial direction.

As shown in FIG. 10, the step portion 14 is disposed between the head portion 12 and the shaft portion 13 in the insert axial direction, and is connected to the head portion 12 and the shaft portion 13. That is, an upper end portion of the step portion 14 is connected to a lower end portion of the head portion 12, and a lower end portion of the step portion 14 is connected to an upper end portion of the shaft portion 13. A dimension in the insert axial direction of the step portion 14 is smaller than the dimension in the insert axial direction of the head portion 12 and the dimension of the shaft portion 13 in the insert axial direction. An outer diameter dimension of the step portion 14 is equal to or smaller than the outer diameter dimension of the head portion 12, and is equal to or larger than the outer diameter dimension of the shaft portion 13.

The outer peripheral surface of the step portion 14 has a tapered shape that increases in diameter toward an upper side in the insert axial direction. That is, the outer diameter of the step portion 14 increases toward the upper side in the insert axial direction. As shown in FIGS. 9 and 10, an inclination angle θ3 of the outer peripheral surface of the step portion 14 with respect to the insert central axis C is larger than the inclination angle Θ1 of the head portion 12 and the inclination angle Θ2 of the shaft portion 13 in the side view as viewed from the insert radial direction. Therefore, the outer peripheral surface of the step portion 14 faces outward in the insert radial direction and faces downward in the insert axial direction. Specifically, the inclination angle θ3 is, for example, 15° or greater and 60° or less.

The inclination angle θ3 may be 30° or greater and 60° or less, or may be 40° or greater and 50° or less.

The index portion 15 is used to align the cutting insert 1 in the insert circumferential direction when the cutting insert 1 is rotationally moved in the insert circumferential direction and reattached to the holder 2, that is, when performing indexing.

The index portion 15 is disposed over a part of the step portion 14 and a part of the head portion 12, and is recessed inward in the insert radial direction from each of the outer peripheral surfaces of the step portion 14 and the head portion 12. Specifically, the index portion 15 is disposed over a portion other than the lower end portion of the step portion 14 and the lower end portion of the head portion 12 in the insert axial direction.

A plurality of the index portions 15 are arranged in the insert circumferential direction. The plurality of index portions 15 are disposed at a distance from each other in the insert circumferential direction. In the present embodiment, four index portions 15 are disposed at equal pitches in the insert circumferential direction. The plurality of index portions 15 include a pair of index portions 15 that are disposed at 180° rotationally symmetrical positions with the insert central axis C as a center. In the present embodiment, two sets of the pair of index portions 15 are provided.

Each index portion 15 has surfaces 15a and 15b located outward in the insert radial direction toward the upper side in the insert axial direction. Specifically, each index portion 15 has a planar alignment surface 15a facing outward in the insert radial direction and an upper side surface 15b disposed on an upper side of the alignment surface 15a in the insert axial direction.

As shown in FIG. 9, when the index portion 15 is viewed from the front in the insert radial direction, the alignment surface 15a has a substantially triangular shape projecting downward in the insert axial direction, and specifically, has a substantially isosceles triangular shape. A dimension of the alignment surface 15a in the insert circumferential direction is larger than a dimension of the alignment surface 15a in the insert axial direction. The dimension of the alignment surface 15a in the insert circumferential direction increases toward the upper side in the insert axial direction.

The alignment surface 15a is located outward in the insert radial direction toward the upper side in the insert axial direction. That is, the alignment surface 15a has an inclined surface shape that is inclined with respect to the insert central axis C. The inclination angle Θ2 of the outer peripheral surface of the shaft portion 13 with respect to the insert central axis C is smaller than an inclination angle θ4 of the alignment surface 15a with respect to the insert central axis C in the side view as viewed from the insert radial direction. That is, the alignment surface 15a has a larger inclination with respect to the insert central axis C than the outer peripheral surface of the shaft portion 13. Specifically, the inclination angle θ4 is, for example, 5° or greater and 20° or less.

The inclination angle θ4 may be 10° or greater and 20° or less, or may be 15° or greater and 20° or less.

As shown in FIG. 10, in the insert axial direction, an upper end portion of the alignment surface 15a is located above a boundary portion 16 between the head portion 12 and the step portion 14, and is located below a mid point 17 between the boundary portion 16 and the cutting edge 11.

The alignment surface 15a has a maximum perimeter portion 15aa with the largest dimension in the insert circumferential direction. A position of the maximum perimeter portion 15aa in the insert axial direction is the same as a position of the boundary portion 16 in the insert axial direction.

As shown in FIG. 9, when the index portion 15 is viewed from the front in the insert radial direction, the upper side surface 15b has a substantially triangular shape projecting upward in the insert axial direction, and specifically, has a substantially isosceles triangular shape. A dimension in the insert circumferential direction of the upper side surface 15b is larger than a dimension in the insert axial direction of the upper side surface 15b. The dimension in the insert circumferential direction of the alignment surface 15a is larger than a dimension in the insert circumferential direction of the upper side surface 15b. The dimension in the insert axial direction of the alignment surface 15a is larger than the dimension in the insert axial direction of the upper side surface 15b. The dimension of the upper side surface 15b in the insert circumferential direction increases toward the lower side in the insert axial direction. The upper side surface 15b is disposed at the same position as the lower end portion of the head portion 12 in the insert axial direction.

The upper side surface 15b is located outward in the insert radial direction toward the upper side in the insert axial direction. That is, the upper side surface 15b has an inclined surface shape that is inclined with respect to the insert central axis C. The upper side surface 15b has a planar shape, and faces outward in the insert radial direction and downward in the insert axial direction. An inclination angle θ5 of the upper side surface 15b with respect to the insert central axis C is larger than the inclination angle θ4 of the alignment surface 15a with respect to the insert central axis C in the side view as viewed from the insert radial direction. That is, the upper side surface 15b has a larger inclination with respect to the insert central axis C than the alignment surface 15a. Specifically, the inclination angle θ5 is, for example, 20° or greater and 60° or less.

The inclination angle θ5 may be 30° or greater and 50° or less, or may be 35° or greater and 45° or less.

### [Holder]

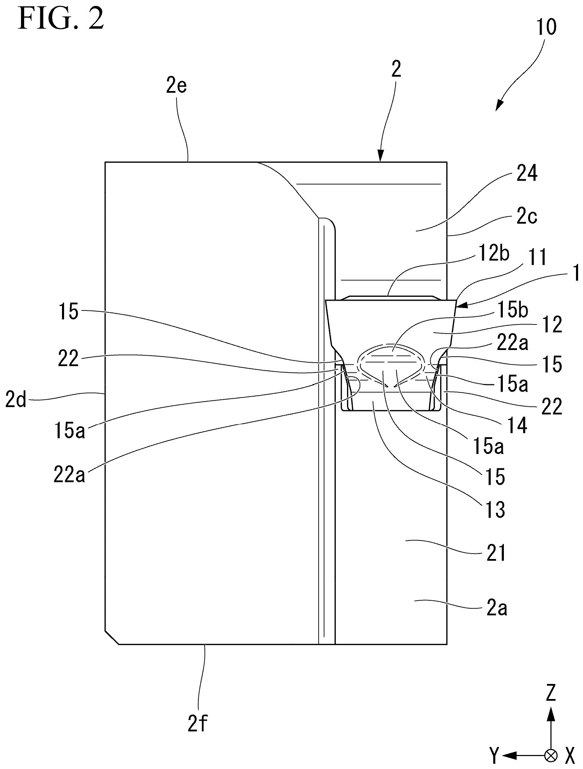

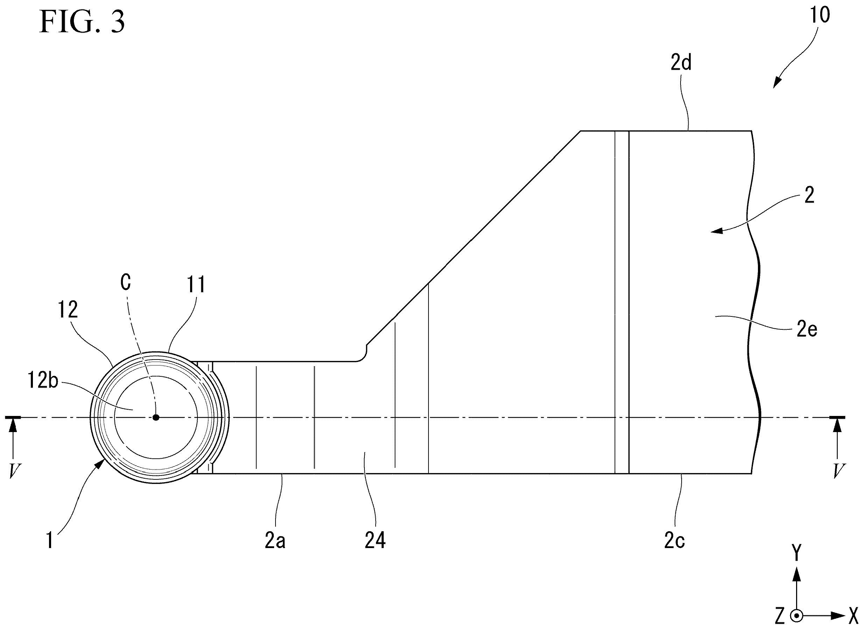

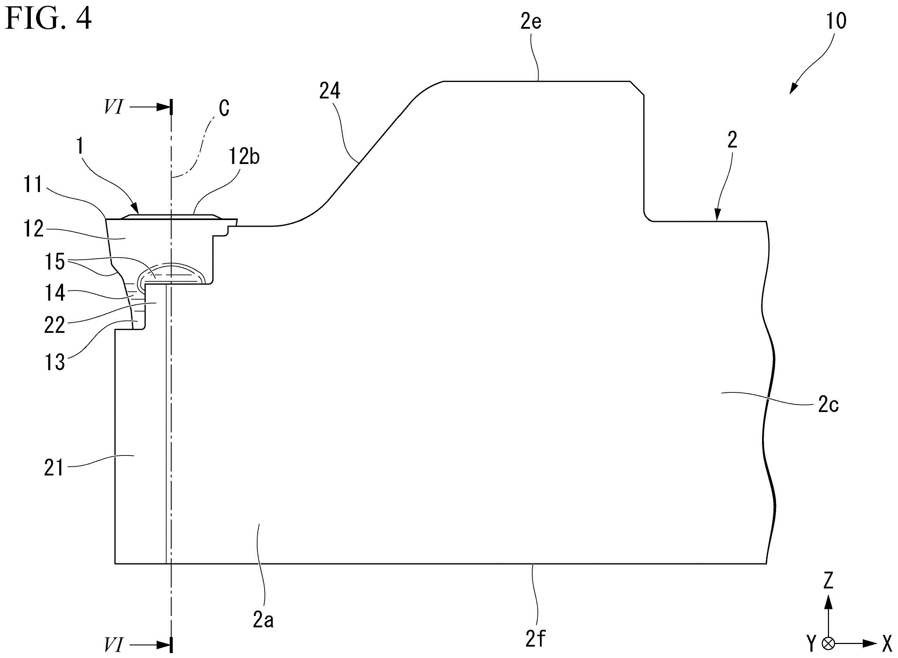

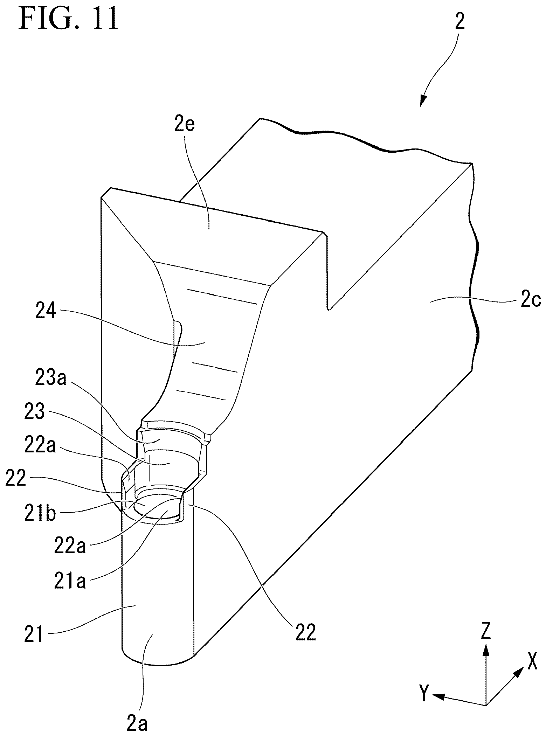

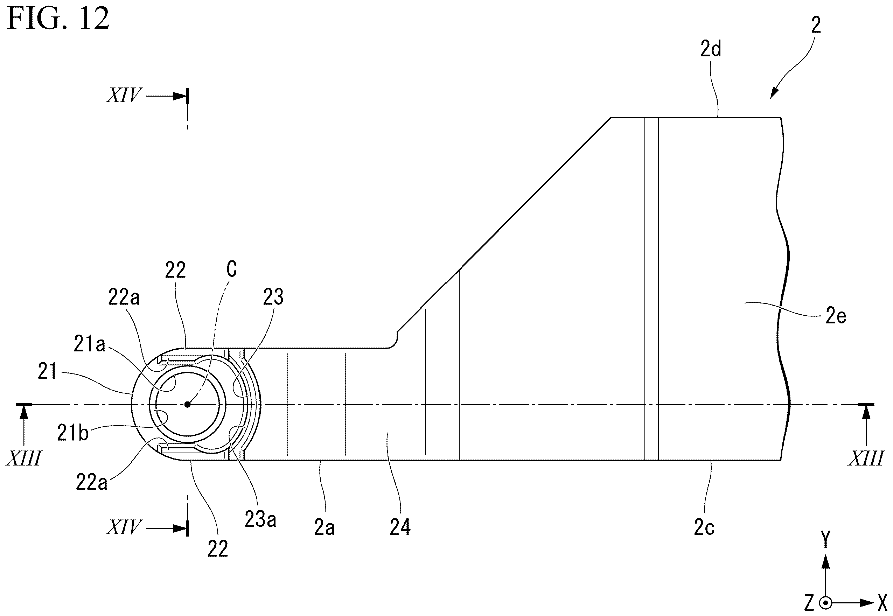

The holder 2 is made of, for example, steel. As shown in FIGS. 11 and 12, the first end portion 2a (that is, the tip portion) of the holder 2 has a smaller dimension in the tool width direction than a portion other than the first end portion 2a. In the present embodiment, as shown in FIGS. 2 and 3, a dimension of the tip portion of the holder 2 in the tool width direction is smaller than the outer diameter dimension of the cutting edge 11 of the cutting insert 1. Therefore, the cutting edge 11 protrudes to the left side and the right side from the tip portion of the holder 2. A portion of the cutting edge 11 that protrudes in the tool width direction (left-right direction) from the tip portion of the holder 2 may be rephrased as a side cutting edge portion. In addition, as shown in FIG. 4, the cutting edge 11 protrudes from the tip portion of the holder 2 to the tool tip side. A portion of the cutting edge 11 that protrudes from the tip portion of the holder 2 to the tool tip side may be rephrased as a front cutting edge portion. When performing cutting, the front cutting edge portion of the cutting edge 11 is mainly used for machining.

Specifically, as shown in FIG. 3, a portion other than a tool posterior end portion of the cutting edge 11 protrudes outward in the insert radial direction from the tip portion of the holder 2 when viewed from the insert axial direction. In the illustrated example, the cutting edge 11 protrudes outward in the insert radial direction from the tip portion of the holder 2 over a range of approximately 240° with the insert central axis C as a center.

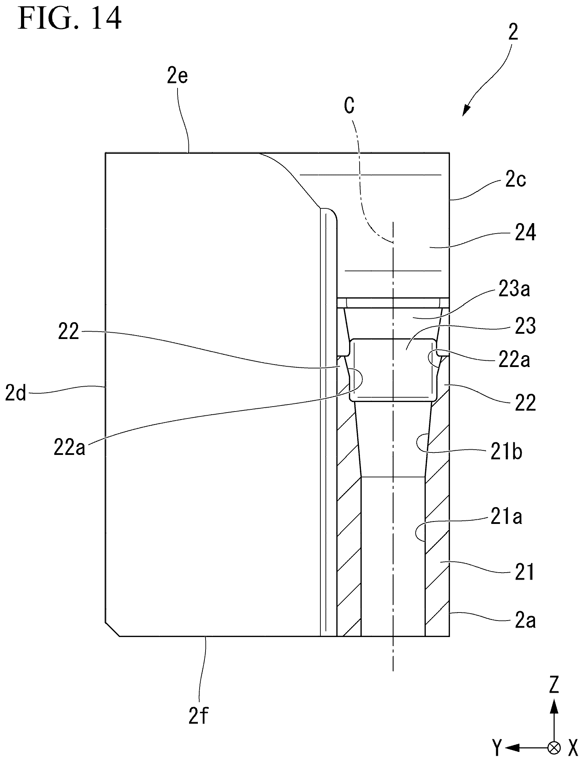

As shown in FIGS. 11 to 14, the cylindrical portion 21 is disposed at an end portion (first end portion 2a) of the holder 2 on the tool tip side. The cylindrical portion 21 is a portion of the holder 2 located closest to the tool tip side.

The cylindrical portion 21 has a cylindrical shape extending in the insert axial direction (up-down direction, Z direction). A central axis of the cylindrical portion 21 is coaxial with the insert central axis C. The cylindrical portion 21 has a through hole 21a. The through hole 21a penetrates the first end portion 2a of the holder 2 in the insert axial direction. The through hole 21a has a shaft hole portion 21b. That is, the holder 2 has the shaft hole portion 21b. In other words, the through hole 21a is formed in the holder 2, and the shaft hole portion 21b is formed in the through hole 21a.

The shaft hole portion 21b is disposed at least at an upper end portion of an inner peripheral surface of the through hole 21a in the insert axial direction. That is, the shaft hole portion 21b constitutes at least a part of an inner peripheral surface of the cylindrical portion 21. The shaft hole portion 21b has a tapered shape that increases in diameter toward an upper side in the insert axial direction. That is, an inner diameter (inner diameter dimension) of the shaft hole portion 21b increases toward the upper side (+Z direction) in the insert axial direction. As shown in FIGS. 5 and 6, an inclination angle of an inner peripheral surface of the shaft hole portion 21b with respect to the insert central axis C is substantially the same as the inclination angle Θ2 of the outer peripheral surface of the shaft portion 13 with respect to the insert central axis C in the vertical sectional view along the insert central axis C (see FIG. 9).

As shown in FIGS. 5 and 6, the shaft portion 13 of the cutting insert 1 is fitted into the shaft hole portion 21b. The shaft hole portion 21b holds the shaft portion 13 by fitting. Specifically, the shaft portion 13 is inserted into the shaft hole portion 21b, and the pressed surface 12b of the cutting insert 1 is pressed downward using a clamping tool (not shown), so that the shaft portion 13 and the shaft hole portion 21b are fixed together by fitting, and thus the cutting insert 1 is held by the holder 2.

As shown in FIGS. 11 to 14, the guide wall portion 22 is disposed on the upper side (+Z direction) of the cylindrical portion 21 in the insert axial direction. The guide wall portion 22 protrudes upward from a portion, excluding an end portion on the tool tip side, of an upper end portion of the cylindrical portion 21. In the present embodiment, the holder 2 is provided with a pair of the guide wall portions 22, and the pair of guide wall portions 22 protrude upward from a left end portion and a right end portion of the upper end portion of the cylindrical portion 21. As shown in FIG. 12, when viewed from the insert axial direction, the pair of guide wall portions 22 are disposed at a distance from each other in the tool width direction with the shaft hole portion 21b interposed therebetween. Each guide wall portion 22 has a plate shape. A pair of plate surfaces of each guide wall portion 22 face the tool width direction. The guide wall portion 22 extends in the tool axial direction.

As shown in FIGS. 6 and 11, the guide wall portion 22 has a planar guide surface 22a that faces inward in the insert radial direction (radial direction of the cylindrical portion 21) and faces the alignment surface 15a of the cutting insert 1. That is, the holder 2 has the guide surface 22a. The guide surface 22a is disposed on one of the pair of plate surfaces of the guide wall portion 22 that faces inward in the insert radial direction. The guide surface 22a is disposed at least at an upper end portion of one plate surface of the guide wall portion 22.

The guide surface 22a is located outward in the insert radial direction toward the upper side in the insert axial direction. That is, the guide surface 22a has an inclined surface shape that is inclined with respect to the insert central axis C (central axis of the cylindrical portion 21). As shown in FIG. 6, an inclination angle of the guide surface 22a with respect to the insert central axis C is substantially the same as the inclination angle θ4 of the alignment surface 15a with respect to the insert central axis C in the vertical sectional view along the insert central axis C (see FIG. 9). In the present embodiment, the alignment surface 15a and the guide surface 22a face each other with a gap therebetween.

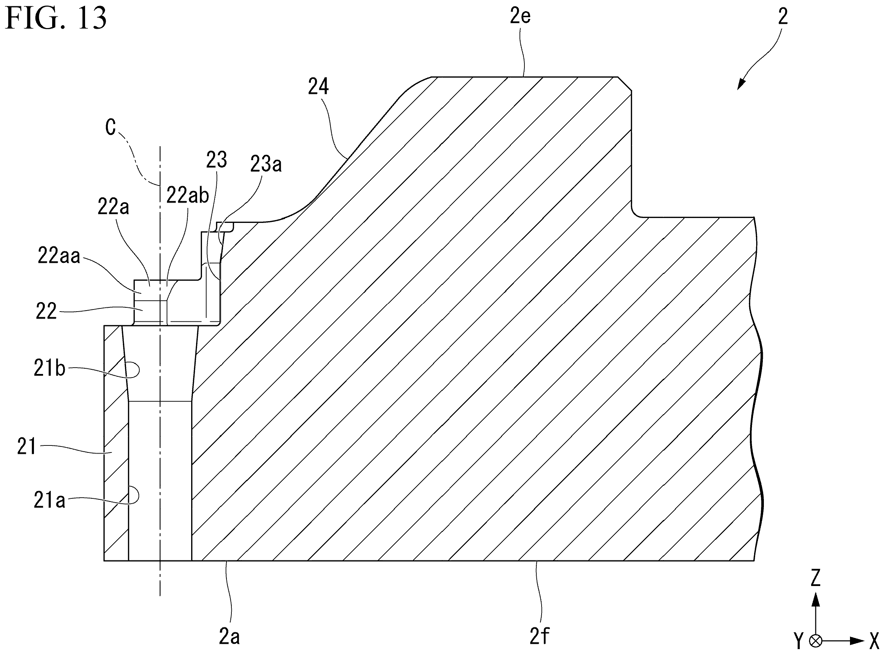

As shown in FIG. 13, the guide surface 22a has a substantially rectangular shape. A dimension of the guide surface 22a in the up-down direction is constant along the tool axial direction. A dimension of the guide surface 22a in the tool axial direction increases toward the upper side. In the present embodiment, a dimension in the tool axial direction of a front portion 22aa of the guide surface 22a that is located on the tool tip side of the insert central axis C (central axis of the cylindrical portion 21) is larger than a dimension in the tool axial direction of a posterior portion 22ab of the guide surface 22a that is located on the tool posterior end side of the insert central axis C. In addition, a surface area of the front portion 22aa of the guide surface 22a is larger than a surface area of the posterior portion 22ab of the guide surface 22a.

As shown in FIGS. 11 to 13, the head portion restraining wall portion 23 is disposed on the upper side of the cylindrical portion 21 in the insert axial direction (Z direction). The head portion restraining wall portion 23 is located on the tool posterior end side with respect to the cylindrical portion 21 and the guide wall portion 22. The head portion restraining wall portion 23 is a wall portion facing the tool tip side. The head portion restraining wall portion 23 has a head portion restraining surface 23a. That is, the holder 2 includes the head portion restraining surface 23a.

The head portion restraining surface 23a is disposed above the cylindrical portion 21 in the insert axial direction (+Z direction), and faces the tool tip side. The head portion restraining surface 23a is located above the guide wall portion 22. The head portion restraining surface 23a is disposed at least at an upper end portion of the head portion restraining wall portion 23. The head portion restraining surface 23a has a recessed curved shape facing inward in the insert radial direction (radial direction of the cylindrical portion 21) and extending in the insert circumferential direction. A dimension of the head portion restraining surface 23a in the insert circumferential direction (circumferential direction of the cylindrical portion 21) is larger than a dimension of the head portion restraining surface 23a in the insert axial direction (up-down direction, Z direction).

The head portion restraining surface 23a is located outward in the insert radial direction (radial direction of the cylindrical portion 21) toward the upper side (+Z direction) in the insert axial direction. The head portion restraining surface 23a has a tapered shape with the insert central axis C (central axis of the cylindrical portion 21) as a center. As shown in FIG. 5, an inclination angle of the head portion restraining surface 23a with respect to the insert central axis C (central axis of the cylindrical portion 21) is substantially the same as the inclination angle Θ1 of the outer peripheral surface of the head portion 12 with respect to the insert central axis C in the vertical sectional view along the insert central axis C (central axis of the cylindrical portion 21) (see FIG. 9).

As shown in FIG. 5, the head portion restraining surface 23a is configured to come into contact with at least a part of the outer peripheral surface of the head portion 12 of the cutting insert 1. In the present embodiment, the head portion restraining surface 23a is configured to come into contact with a portion of the outer peripheral surface of the head portion 12 facing the tool posterior end side. The head portion restraining surface 23a is configured to come into contact with an intermediate portion of the outer peripheral surface of the head portion 12 that is located between the upper end portion and the lower end portion in the insert axial direction. The head portion 12 of the cutting insert 1 is supported from the tool posterior end side by the holder 2 by the contact between the outer peripheral surface of the head portion 12 and the head portion restraining surface 23a.

As shown in FIGS. 11 to 14, the front wall portion 24 is disposed on the upper side (+Z direction side) of the cylindrical portion 21, the guide wall portion 22, and the head portion restraining wall portion 23 in the insert axial direction (Z direction). The front wall portion 24 is located on the tool posterior end side with respect to the cylindrical portion 21, the guide wall portion 22, and the head portion restraining wall portion 23. The front wall portion 24 is a wall portion facing the tool tip side. The front wall portion 24 is located on the tool posterior end side toward the upper side in the insert axial direction. That is, the front wall portion 24 has an inclined surface shape that is inclined with respect to the insert central axis C (central axis of the cylindrical portion 21). In the present embodiment, a dimension in the tool width direction of a portion other than a tool posterior end portion of the front wall portion 24 is smaller than a dimension in the tool width direction of the tool posterior end portion of the front wall portion 24.

### [Operational Effects Achieved by Present Embodiment]

In the cutting insert 1, the holder 2, and the indexable cutting tool 10 according to the present embodiment described above, when the cutting insert 1 is attached to the holder 2, the cutting insert 1 is held by the holder 2 by fitting the shaft portion 13 into the shaft hole portion 21b. In this case, the planar alignment surface 15a of the predetermined index portion 15 among the plurality of index portions 15 of the cutting insert 1 is guided by the planar guide surface 22a of the holder 2, whereby the cutting insert 1 is accurately aligned and indexed in the insert circumferential direction. In the present embodiment, the predetermined index portion 15 is the pair of index portions 15 facing both sides in the tool width direction, that is, the left side and the right side.

According to the present embodiment, a screw member or the like for fixing the cutting insert 1 to the holder 2 is unnecessary, the number of parts can be reduced, and a manufacturing cost can be reduced. In addition, the alignment surface 15a and the guide surface 22a for indexing the cutting insert 1 have a simple structure, the cutting insert 1 and the holder 2 are easily manufactured, and the accuracy and workability of the alignment when performing indexing are improved.

In addition, the index portion 15 of the cutting insert 1 is recessed inward in the insert radial direction from the outer peripheral surface of each of the head portion 12 and the step portion 14. Therefore, the alignment surface 15a is located on the inner side in the insert radial direction with respect to the outer peripheral surface of each of the head portion 12 and the step portion 14 in the insert radial direction. The guide surface 22a of the holder 2 facing the alignment surface 15a can also be disposed close to the insert central axis C. Accordingly, as in the present embodiment, it is possible to dispose the guide wall portion 22 of the holder 2 where the guide surface 22a is located, on the inner side in the insert radial direction with respect to the outer peripheral surface of the head portion 12 of the cutting insert 1. According to the present embodiment, it is possible to achieve a compact size by suppressing a tool width dimension of a tool tip portion on which the cutting insert 1 is disposed to be small, which makes it possible to cope with various cutting conditions.

In addition, in the present embodiment, a dimension of the alignment surface 15a in the insert circumferential direction is larger than a dimension of the alignment surface 15a in the insert axial direction.

In this case, a large dimension of the alignment surface 15a in the insert circumferential direction is secured, so that indexing of the cutting insert 1 is easier. In addition, since the dimension of the alignment surface 15a in the insert axial direction is suppressed to be small, a volume reduction amount of the cutting insert 1 due to the provision of the index portion 15 can be suppressed to be small, and an insert strength can be secured.

In addition, in the present embodiment, the position of the maximum perimeter portion 15aa of the alignment surface 15a in the insert axial direction is the same as the position of the boundary portion 16 between the head portion 12 and the step portion 14 in the insert axial direction.

In this case, it is easy to secure a large dimension of the alignment surface 15a in the insert circumferential direction. Accordingly, indexability is improved.

In addition, in the present embodiment, the alignment surface 15a is located outward in the insert radial direction toward the upper side in the insert axial direction.

In this case, the alignment surface 15a has an inclined surface shape extending outward in the insert radial direction toward the upper side in the insert axial direction, and is inclined with respect to the insert central axis C. Therefore, a volume reduction amount on the head portion 12 side due to the provision of the index portion 15 can be suppressed to be small, and an insert strength can be stably secured in the head portion 12 in which the cutting edge 11 is disposed.

In addition, in the present embodiment, the inclination angle θ5 of the upper side surface 15b with respect to the insert central axis C is larger than the inclination angle θ4 of the alignment surface 15a with respect to the insert central axis C in the side view as viewed from the insert radial direction.

In this case, since the index portion 15 has the upper side surface 15b having the large inclination angle θ5 with respect to the insert central axis C, the volume reduction amount on the head portion 12 side due to the provision of the index portion 15 can be further suppressed to be small.

In addition, in the present embodiment, the inclination angle θ2 of the outer peripheral surface of the shaft portion 13 with respect to the insert central axis C is smaller than the inclination angle θ4 of the alignment surface 15a with respect to the insert central axis C in the side view as viewed from the insert radial direction.

In this case, during manufacturing, processing for forming the shaft portion 13 of the cutting insert 1 and processing for forming the shaft hole portion 21b of the holder 2 that is fitted into the shaft portion 13 are easy.

In addition in the present embodiment, the difference between the inclination angle θ1 of the outer peripheral surface of the head portion 12 with respect to the insert central axis C and the inclination angle θ2 of the outer peripheral surface of the shaft portion 13 with respect to the insert central axis C is within 5° in a side view as viewed from the insert radial direction.

As in the present embodiment, in a case where the shaft portion 13 of the cutting insert 1 is held by the shaft hole portion 21b and the head portion 12 is supported by the head portion restraining surface 23a, when the inclination angle Θ2 of the shaft portion 13 and the inclination angle Θ1 of the head portion 12 are close to each other as in the above configuration, the fixed state of the cutting insert 1 to the holder 2 is less affected even though the cutting insert 1 is isotropically expanded and contracted by sintering or the like during manufacturing. That is, the cutting insert 1 is stably held by the holder 2.

In addition, in the present embodiment, in the insert axial direction, the upper end portion of the alignment surface 15a is located above the boundary portion 16 between the head portion 12 and the step portion 14, and is located below a mid point 17 between the boundary portion 16 and the cutting edge 11.

In this case, it is possible to easily secure a large dimension of the alignment surface 15a in the insert circumferential direction while stably increasing a strength of the cutting edge 11, thereby improving workability of the indexing.

In addition, in the present embodiment, the plurality of index portions 15 include the pair of index portions 15 that are disposed at 180° rotationally symmetrical positions with the insert central axis C as a center.

In this case, each alignment surface 15a of the pair of index portions 15 facing opposite sides of each other in the insert radial direction is guided by each of a pair of the guide surfaces 22a of the holder 2, thereby improving the accuracy and workability of the alignment when performing indexing.

In addition, in the present embodiment, the guide wall portion 22 protrudes upward from a portion, excluding an end portion on the tool tip side, of the upper end portion of the cylindrical portion 21.

In this case, since the guide wall portion 22 is not disposed between the cylindrical portion 21 and the used portion (front cutting edge portion) of the cutting edge 11 that is located directly above the end portion of the cylindrical portion 21 on the tool tip side, the guide wall portion 22 is less likely to interfere with machining. In addition, a coolant can be efficiently supplied to the used portion of the cutting edge 11 from the lower side of the cutting insert 1 through the flank face 12c.

In addition, in the present embodiment, the holder 2 includes the head portion restraining surface 23a that comes into contact with the outer peripheral surface of the head portion 12 of the cutting insert 1.

In this case, the cutting insert 1 is held by the holder 2 in such a manner that the shaft portion 13 is fitted into the shaft hole portion 21b, and the head portion 12 is supported by the head portion restraining surface 23a. Therefore, an attaching posture of the cutting insert 1 with respect to the holder 2 is more stable.

In addition, in the present embodiment, the alignment surface 15a of the cutting insert 1 and the guide surface 22a of the holder 2 face each other with a gap therebetween.

In this case, when performing indexing, the shaft portion 13 is stably fitted into the shaft hole portion 21b while the alignment surface 15a is stably guided by the guide surface 22a. Therefore, the attaching posture (that is, fixed state) of the cutting insert 1 with respect to the holder 2 is more stable.

### [Other Configurations included in Present Invention]

The present invention is not limited to the above-described embodiments. For example, as will be described below, the configurations can be changed within the scope not departing from the concept of the present invention.

In the above-described embodiment, an example has been described in which the upper side surface 15b of the index portion 15 has a planar shape, but the present invention is not limited to this. The upper side surface 15b may have, for example, a protruded curved shape that bulges outward in the insert radial direction, a recessed curved shape that is recessed inward in the insert radial direction, or the like.

In the above-described embodiment, an example has been described in which four index portions 15 are arranged in the insert circumferential direction, but the present invention is not limited to this. Three or less or five or greater index portions 15 may be arranged in the insert circumferential direction.

According to the present invention, all of the configurations described in the above-described embodiments and modification examples may be combined with each other within the scope not departing from the concept of the present invention. Alternatively, additions, omissions, or substitutions of the configurations, and other modifications can be made. Moreover, the present invention is not limited by the embodiment described above and the like, but is limited only by the scope of the claims.

### [Industrial Applicability]

According to the present invention, the cutting insert, the holder, and the indexable cutting tool have simple and compact configurations, the number of parts is reduced, and the accuracy and workability of the alignment when indexing a cutting insert can be improved. Therefore, the present invention is industrially applicable.

### [Reference Signs List]

1: Cutting insert
2: Holder
10: Indexable cutting tool
11: Cutting edge
12: Head portion
13: Shaft portion
14: Step portion
15: Index portion
15a: Alignment surface
15aa: Maximum perimeter portion
15b: Upper side surface
16: Boundary portion
17: Mid point
21: Cylindrical portion
21b: Shaft hole portion
22: Guide wall portion
22a: Guide surface
23a: Head portion restraining surface
C: Insert central axis
θ1, θ2, θ3, θ4, θ5: Inclination angle

## Claims

1. A cutting insert having a multi-stage columnar shape with an insert central axis as a center, the cutting insert comprising:
a head portion having a circular cutting edge with the insert central axis as a center;
a shaft portion disposed on a lower side of the head portion in an insert axial direction along the insert central axis and having a smaller outer diameter dimension than the head portion;
a step portion configured to connect the head portion and the shaft portion; and
an index portion disposed over a part of the step portion and a part of the head portion and recessed inward in an insert radial direction orthogonal to the insert central axis from an outer peripheral surface of each of the step portion and the head portion,
wherein a plurality of the index portions are arranged in an insert circumferential direction around the insert central axis, and
each of the index portions has a planar alignment surface facing outward in the insert radial direction.

2. The cutting insert according to Claim 1,
wherein a dimension of the alignment surface in the insert circumferential direction is larger than a dimension of the alignment surface in the insert axial direction.

3. The cutting insert according to Claim 1 or 2,
wherein the alignment surface has a maximum perimeter portion with a largest dimension in the insert circumferential direction, and
a position of the maximum perimeter portion in the insert axial direction is the same as a position of a boundary portion between the head portion and the step portion in the insert axial direction.

4. The cutting insert according to any one of Claims 1 to 3,
wherein the alignment surface is located outward in the insert radial direction toward an upper side in the insert axial direction.

5. The cutting insert according to Claim 4,
wherein the index portion has an upper side surface disposed on an upper side of the alignment surface in the insert axial direction,
the upper side surface is located outward in the insert radial direction toward the upper side in the insert axial direction, and
an inclination angle of the upper side surface with respect to the insert central axis is larger than an inclination angle of the alignment surface with respect to the insert central axis in a side view as viewed from the insert radial direction.

6. The cutting insert according to Claim 4 or 5,
wherein an outer peripheral surface of the shaft portion has a tapered shape that increases in diameter toward the upper side in the insert axial direction, and
an inclination angle of the outer peripheral surface of the shaft portion with respect to the insert central axis is smaller than an inclination angle of the alignment surface with respect to the insert central axis in a side view as viewed from the insert radial direction.

7. The cutting insert according to Claim 6,
wherein the outer peripheral surface of the head portion has a tapered shape that increases in diameter toward the upper side in the insert axial direction, and
a difference between an inclination angle of the outer peripheral surface of the head portion with respect to the insert central axis and the inclination angle of the outer peripheral surface of the shaft portion with respect to the insert central axis is within 5° in the side view as viewed from the insert radial direction.

8. The cutting insert according to any one of Claims 1 to 7,
wherein, in the insert axial direction, an upper end portion of the alignment surface is located above a boundary portion between the head portion and the step portion, and is located below a mid point between the boundary portion and the cutting edge.

9. The cutting insert according to any one of Claims 1 to 8,
wherein the plurality of index portions include a pair of the index portions that are disposed at 180° rotationally symmetrical positions with the insert central axis as a center.

10. A holder to which the cutting insert according to any one of Claims 1 to 9 is detachably attached, the holder comprising:
a cylindrical portion extending in the insert axial direction; and
a guide wall portion disposed on an upper side of the cylindrical portion in the insert axial direction,
wherein the cylindrical portion has a shaft hole portion configured to hold the shaft portion by fitting, and
the guide wall portion has a planar guide surface that faces inward in the insert radial direction and faces the alignment surface.

11. The holder according to Claim 10,
wherein the cylindrical portion is disposed at an end portion of the holder on a tool tip side, and
the guide wall portion protrudes upward from a portion, excluding an end portion on the tool tip side, of an upper end portion of the cylindrical portion.

12. The holder according to Claim 10 or 11, further comprising:
a head portion restraining surface that is disposed above the cylindrical portion in the insert axial direction and that comes into contact with at least a part of an outer peripheral surface of the head portion.

13. An indexable cutting tool comprising:
the cutting insert according to any one of Claims 1 to 9; and
a holder to which the cutting insert is detachably attached,
wherein the holder has
a shaft hole portion configured to hold the shaft portion by fitting, and
a planar guide surface that faces inward in the insert radial direction and faces the alignment surface.

14. The indexable cutting tool according to Claim 13,
wherein the alignment surface and the guide surface face each other with a gap therebetween.
